# EUROPEAN PATENT APPLICATION

(11) **EP 1 992 408 A1**
(43) Date of publication of application: **19.11.2008**
(21) Application number: 07704746.2
(22) Date of filing: 25.01.2007
(51) Int. Cl.: B01J 20/12, B01J 20/20, B01D 53/02

(54) **ADSORBENT COMPOSITION CONTAINING ENSTATITE, METHOD FOR OBTAINING SAME AND USE THEREOF**

(30) Priority: 27.01.2006 ES 200600187
(71) Applicant: Bionatur Biotechnologies S.L., 08019 Barcelona (ES)
(72) Inventor: BLANCO ALVAREZ, Jesús, E-28043 Madrid (ES); ROMERO SALVADOR, Arturo, E-28668 BOADILLA DEL MONTE (Madrid) (ES)
(74) Representative: Ungria Lopez, Javier
(86) International application number: PCT/ES2007/000034
(87) International publication number: WO 2007/085672

(57) **Abstract**

The present invention relates to a composition of an adsorbent material **characterised in that** it comprises enstatite together with a second component selected from between:
a) activated carbon and
b) alumina powder

which can be shaped as granules; tablets; spheres; solid cylinders; hollow cylinders similar to smooth or striated macaroni, straight, bent, regularly or irregularly cut into any shape and size; or plates, and is preferably shaped as a structure of parallel channels along the longitudinal axis in a number greater than 2 and less than 100 channels per square centimetre of transverse cross-section, and to its use as an adsorbent material for liquids, gases and vapours.

## Description

### SECTOR OF THE ART

This invention, set within the chemical sector, presents novel materials with application as adsorbents for the industrial purification of fluids.

### STATE OF THE ART

Sepiolite is found in nature in two main forms: α-sepiolite which appears with large bundles or sheaves of crystalline fibres, and p-sepiolite, which comes in the form of amorphous aggregates, small rounded sheets or rods. The morphology of sepiolite is very important in relation to its possible applications; take patent US-4.266.672 as an example, which describes a process for the cracking of hydrocarbons with a catalyst containing sepiolite whose configuration must necessarily be in the form of rods in order to achieve the desired catalytic reaction.

Sepiolite is a hydrated magnesium silicate of natural origin for which various structural formulas have been put forward, such as Si₁₂Mg₈O₃₀(OH)₄₈ H₂O, with stoichiometric variations in terms of the number of protons, surface hydroxyl groups and molecules of crystallisation water depending on its origin and later purification treatment. The fibrous structure of α-sepiolite consists of some talc-like ribbons parallel to the axis of the fibre with two layers of tetrahedral units of silica joined to a layer of octahedral units of magnesium via oxygen atoms. Its alternating arrangement determines the presence of channels oriented in the direction of the fibre, with a cross-section of 36 x 106 nm. More detailed information can be found in the review conducted by A. Álvarez, Palygorskite-Sepiolite Occurrences. Genesis and Uses, Section VI, pp. 253-286. Ed. by Singer and E. Galan. Elsevier (1984). This highly peculiar structure results in its adsorbent and rheological properties which can be modified with different treatments or by means of the incorporation of other materials. According to F. Temprano and R. Pérez Catells, Quimica e Industria vol 35,5. 467-470 (1989), its adsorbent properties are the consequence of the large surface area offered by the material, while its rheological properties are likewise due to the anisotropy of its particles.

In the application of catalytic and adsorbent compounds, especially for the treatment and purification of effluents under a dynamic system, it is desirable for these materials to offer the least resistance to the treated fluid as it passes through it, and in order to comply with this condition, the material preferably consists of structures that are perforated along the longitudinal axis by multiple parallel channels known as monoliths or a honeycomb.

On account of its pseudoplastic nature, in other words, high viscosity at low shear and low viscosity at high shear, α-sepiolite has been of great use as a binder in the shaping of pieces in the form of a honeycomb. This use is described in inventions forming the object of patent both of novel catalysts and of adsorbents: so, for example, Spanish patent applications 9601954 and 8803453 describe its use in the preparation of catalysts in the form of monoliths of vanadium and tungsten oxides supported on titanium oxide used in the elimination of traces of nitrogen oxides. In Spanish patent 9201357 it is used as a raw material in the shaping of supports in the form of a honeycomb of cordierite for use in catalytic cartridges for automobiles.

Moreover, the adsorption properties of active carbons are known. Applications of these materials in industrial units for the elimination of impurities and also for purification of gases or recovery of organic vapours are widespread.

Furthermore, EP-0978313 describes an adsorbent compound shaped like a honeycomb which consists of α-sepiolite which incorporates activated carbon homogeneously dispersed within the structure of the silicate; the compound thus created is dried at a temperature below that of the oxidation of the activated carbon it contains, and it is used as an adsorbent for gases and vapours. The adsorbents contained in that patent combine the plasticity and high external surface of the α-sepiolite with the microporosity of the activated carbon; in other words, it is a compound which can be easily shaped into honeycomb structures and with a high adsorption speed owing to the α-sepiolite and high storage capacity owing to the activated carbon. Nevertheless, the industrial application of these compounds is very limited on account of their low resistance to abrasion and ease with which they crumble in the presence of water or steam.

In the review by A. Álvarez cited earlier, it is stated that, above 800°C, α-sepiolite commences an exothermic transformation to a new phase of magnesium silicate and that this phase possibly represents the crystallisation of the enstatite which is developed slowly up to a maximum of 1350°C (Grim, R.E., 1968 Clay Mineralogy MacGraw-Hill. p. 596).

Finally, a document of the same inventor - WO9839093 - refers to and adsorbent based on natural silicates, such as alfa-sepiolite in combinación with activated carbon, wherein the dried material is treated at temperatures between 300 and 1000°C, there is no an indication of preferred time periods or temperature ranges: therefore, there is no disclosure of, or suggestion of a need of, obtaining enstatite.

### DESCRIPTION OF THE INVENTION

The present invention relates to novel adsorbents containing enstatite and offering great resistance to abrasion and complete structural stability towards water or steam.

The present invention relates to a composition of an adsorbent material characterised in that it comprises enstatite together with a second component selected from between:
- activated carbon and
- alumina powder.

Said composition can be shaped as granules, tablets, spheres, solid cylinders, hollow cylinders, plates, or in a structure of parallel channels along the longitudinal axis in a number greater than 2 and less than 100 channels per square centimetre of transverse cross-section, generally known as a monolith or honeycomb. The composition preferably adopts the form of monoliths or honeycomb, or of hollow cylinders.

When the composition adopts the form of hollow cylinders, these hollow cylinders can be of the "macaroni" type, smooth, striated, straight, bent, regularly or irregularly cut into any shape and size. The macaroni can have a length of approximately 0.5 cm to approximately 10 cm, and the thickness of wall can be between approximately 0.04 cm and approximately 0.5 cm.

According to a particular preferred embodiment the composition comprises enstatite and activated carbon and the activated carbon is in the form of segregated particles of a size between 2 and 20 µm.

According to an additional particular preferred embodiment the composition comprises enstatite and alumina.

The novel adsorbents of the present invention can easily be shaped into honeycomb or monolith structures and offer textural properties which will permit the design and operation of more efficient and less costly adsorption units under a dynamic system.

The present invention also refers to a method for preparing the composition defined above, characterised in that it comprises the following steps:
a) mixing powders of α-sepiolite and the second component until a homogenous mix of powders is obtained,
b) kneading the homogenous mix of powders obtained with the addition of water in order to produce a damp paste,
c) shaping the damp paste into the desired shape for obtaining a piece,
d) drying the shaped piece by exposure to air and at ambient temperature for at least 2 hours and at between 80 and 270°C for at least 2 hours,
e) subjecting the piece to heat treatment at temperatures between 830 and 1350°C, preferably between 830 and 1250°C, more preferably between 830 and 900°C, for at least 2 hours.

According to an embodiment of the present inventive method, stage e) comprises treating the piece at temperatures between 830°C and 1250°C, for at least 2 hours, and more preferably stage e) comprises treating the piece at temperatures between 830°C and 1250°C in an inert or reducing atmosphere, for at least 2 hours.

According to a preferred embodiment of the method, this comprises the following steps:
a. mixing powders of α-sepiolite and of activated carbon until a homogenous mix of powders is obtained,
b. kneading the homogenous mix of powders obtained with the addition of water in order to produce a damp paste,
c. shaping the damp paste into the desired shape for obtaining a piece,
d. drying the shaped piece by exposure to air and at ambient temperature for at least 2 hours and at between 80 and 270°C for 2 hours,
e. subjecting the piece to heat treatment at temperatures between 830 and 1350°C, preferably between 830 and 1250°C, more preferably still between 830 and 900°C, in an inert or reducing atmosphere, for at least 2 hours, preferably for at least 4 hours.

According to this embodiment, in the mixture a) α-sepiolite and activated carbon are preferably mixed in a weighted ratio of α-sepiolite / activated carbon of 0.5 ≤ r ≥ 4, and more preferably of 1 ≤ r ≤ 2.

The obtaining of the composition consisting of enstatite and activated carbon is carried out by means of the shaping of pastes prepared in an aqueous medium with the mixing of powders of α-sepiolite and activated carbon without adding any other additive or component.

The present invention also relates to the use of a composition defined as above as an adsorbent material for liquids, gases and vapours.

The natural sepiolite used as raw material in this invention is a compact form of α-sepiolite and has been supplied by Tolsa, S.A. This is a hydrated magnesium silicate, whose typical weight content in impurities is as follows: Al₂O₃: 2.6 %; Fe₂O₃: 0.3 %; K₂O: 0.6 %; CaO: 0.9 %; Na₂O: 0.1 %.

In this invention, any activated carbon can be used independently of its origin or activation procedure, with a segregated particle size of preferably between 2 and 20 µm.

Heat treatments of the shaped and dried material at temperatures below 800°C give rise to pieces that are overly sensitive to abrasion and to crumbling of the physical structure due to the effect of water. When the shaped and dried material is treated at temperatures between 800°C and 1000°C for short periods of time, a loss of water or of hydroxyl groups takes place, the α-sepiolite becomes irreversibly dehydrated and the shaped structures of the compound increase their resistance to abrasion though they continue to show problems of softening and destruction of their physical form in the presence of water, which means that they cannot be used in the industrial purification of contaminated water under a dynamic system. Nevertheless, when the heat treatment of the material is carried out at temperatures between 830°C and 1350°C, for a period of time of no less than 2 hours, a new crystalline phase of magnesium silicate appears, known as enstatite, ASTM 11-0273, which surprisingly very appreciably increases the mechanical properties of the shaped material and renders it structurally stable in the presence of water or steam.

The shaped pieces subjected to heat treatment at temperatures between 830°C and 1350°C, preferably between 830 and 900°C, in an inert atmosphere, for at least 2 hours in order to permit the formation of enstatite show a high content of new large-diameter pores, primarily originated by the interparticular gaps or spaces created during the kneading, shaping and drying of these materials. In other words, in these new adsorbent compounds it is not just that the adsorption properties of the two raw materials are maintained, a macroporosity is also formed which increases the external surface area and therefore strengthens the parameters determining the adsorption speed (a variable of great importance in adsorption units working under dynamic systems).

The formation of enstatite does not produce any significant variations in the porous structure of the compound nor in its adsorption capacity. So, compounds structured in the form of monoliths, with a square cell of 0.18 x 0.18 cm and wall thickness of 0.08 cm, prepared with α-sepiolite and activated carbon GL-50, originating from peat and supplied by Norit, in the weight ratio 1:1, gave rise to adsorbents which, after being treated for 4 hours in an inert atmosphere, at temperatures of 150°C, 500°C and 850°C, showed the following values of structural parameters and adsorption capacity of trichloroethylene:
Total pore volume: 0.87 ml g⁻¹(150°C), 0.89 ml g⁻¹ (500°C) and 0.84 ml g⁻¹ (850°C); Specific surface: 444 m² g⁻¹ (150°C), 449 m² g⁻¹ (500°C), 400 m² g-⁻¹ (850°C); Adsorption of trichloroethylene: 0.74 g g⁻¹ (150°C), 0.77 g g⁻¹ (500°C), 0.71 g g⁻¹ (850°C).
Breaking pressure: 111 kg cm⁻² (150°C), 130 kg cm⁻² (500°C) and 259 kg cm⁻² (850°C).

When other adsorbent silicates or oxides stable at 850°C are used instead of activated carbon, similar results are obtained. So, for example, compounds structured in the form of monoliths prepared with powders of α-sepiolite and γ-alumina, coming from the bohemite Pural SB supplied by Condea, in the weight ratio 1:1, gave rise to adsorbents which, after being treated for 4 hours in air at temperatures of 150°C, 500°C and 850°C, showed the following values:
Total pore volume: 0.59 ml g⁻¹ (150°C), 0.70 ml g⁻¹ (500°C) and 0.60 ml g⁻¹ (850°C); Specific surface: 214 m² g⁻¹ (150°C), 196 m² g⁻¹ (500°C), 107 m² g⁻¹ (850°C); Adsorption of trichloroethylene: 0.59 g g⁻¹ (150°C), 0.67 g g⁻¹ (500°C), 0.58 g g⁻¹ (850°C).
Breaking pressure: 169 kg cm⁻² (150°C), 103 kg cm⁻² (500°C) and 326 kg cm⁻² (850°C).

In both examples, only the monoliths treated at 850°C kept their structure intact after a stream of water had passed through their channels at a linear speed of 1.25 m s⁻¹, at temperatures of 20-25°C for 30 days.

In order to check their resistance to abrasion, dry air was passed through the channels of the samples obtained at 150, 500 and 850°C for both examples, at a speed of 5 m s⁻¹, at ambient temperature, for 3200 hours; only the monoliths treated at 150°C had any weight loss, which was estimated at 2-3 %.

For the preparation of the materials forming the subject of this invention, according to a preferred embodiment powders of α-sepiolite and activated carbon were mixed dry and homogeneously; afterwards, the mixture was kneaded with water in a high shear kneading machine. The elemental acicular particles of the sepiolite are normally found to form bundles. When these particles are kneaded suitably in an aqueous medium (or in any other polar solvent) the space between the bundles widens, and molecules of the solvent become housed in their interior, due mainly to the hydrogen bonds between the surface silanol groups and the molecules of the solvent. When particles of active carbon are also present during the kneading, they are easily incorporated by this mass of a pseudoplastic nature, and an intimate mixture of both compounds is produced. The mass obtained following the kneading is moulded or extruded in order to obtain the desired shape and is then dried, preferably at ambient temperature for at least 2 hours, and at 80-270°C for at least 2 hours; the material is then subjected to heat treatment at between 830-1350°C, preferably between 830 and 900°C, for at least 4 hours in an inert atmosphere.

When the damp mass obtained in the kneading is preferably shaped into structures perforated by parallel channels along its longitudinal axis (monoliths or honeycomb structures with 2 or 100 channels/cm²), materials are obtained with a high operational performance for adsorption under a dynamic system, which permit large volumes of fluids to be treated with minimum load losses.

The compositions according to the present invention are useful as adsorbents for liquids, gases and vapours. Their use as adsorbent for air can be mentioned, whereby all kind of bacteria, other microorganisms, dust, mites, organic compounds and heavy metals are removed.

They are also useful as adsorbents for gases in the industry, for example, in chimneys of cement industries, removing all the noxious substances, such as carbon oxides, nitrogen oxides, sulphur oxides and heavy metals.

Similarly, they can be used as adsorbent for gases in the food industry, proving their fungicide and bactericide effect, and removing the bad smells, the fungi and bacteria.

Another use as adsorbent is that derived from their fungicide effect, removing fungi as shown in the examples below.

### EXAMPLES OF EMBODIMENT OF THE INVENTION

The present invention is furthermore illustrated by means of the following examples, which do not aim to be limiting in their scope.

### Example 1

A commercial activated carbon from sawdust is used, known as AC35, supplied by Elf Atochem, displaying a specific surface of 1270 m² g⁻¹, a micropores volume of 0.57 ml g⁻¹ and a mesopores volume of 0.09 ml g⁻¹. The α-sepiolite supplied by Tolsa S.A., after being treated at 200°C in air for 3 hours, displayed a specific surface of 182 m² g⁻¹, a micropores volume of 0.02 ml g⁻¹ and a mesopores volume of 0.42 ml g⁻¹. Neither of the two raw materials used had any macropores.

1 kg of dry sepiolite with a segregated particle size of 90% < 0.3 µm is mixed with 1 kg of active carbon with a segregated particle size of 90% < 3.7 µm. Once the homogenous mixture is obtained, it is introduced into a double sigma kneading machine and the kneading process is commenced slowly adding deionised water; once the addition of water is complete, the kneading is continued for 4 hours. The mass thus obtained is shaped by means of an extruder in order to obtain a parallelepiped perforated by channels parallel along the length of the longitudinal axis with external dimensions 5 x 5 x 50 cm which presents a geometric surface of 8.65 m² m⁻³. The transverse cross-section of the channels is square with dimensions 0.25 x 0.25 cm and wall thickness 0.09 cm. The pieces shaped in the form of a honeycomb, generally known as monoliths, are dried by exposure to air and at ambient temperature for 24 hours and then treated at 200°C for 3 hours in an atmosphere of air and at 850°C for 4 hours in an atmosphere of nitrogen, this obtaining the composition with enstatite.

The monoliths thus obtained show a specific surface of 685 m² g⁻¹, a micropores volume of 0.28 ml g⁻¹, a mesopores volume of 0.769 ml g⁻¹ and macropores volume of 0.40 ml g⁻¹. The breaking pressure of the monolith obtained was 414 kg/cm² and its structure was perfectly stable towards water and steam.

The adsorption capacity was determined in trials conducted with different adsorbents, at temperatures of 22-24°C and in a static system. The values obtained in the corresponding trials were 0.43 g of orthodichlorobenzene, 0.53 g of toluene, 0.54 g of trichloroethylene and 0.63 g of acetone per gram of adsorbent.

### Example 2

Monoliths were prepared in the manner described in example 1, though the activated carbon used was Fluesorb B obtained starting from carbon and supplied by Chemviron, which displays a specific surface of 1093 m² g⁻¹, a micropores volume of 0.42 ml g⁻¹ and a mesopores volume of 0.22 ml g⁻¹, with a segregated particle size of 90% < 12.3 µm.

The monoliths obtained show a specific surface of 570 m² g⁻¹, a breaking pressure of 302 kg cm⁻² and complete resistance to water. The values of the micro-, meso- and macropores volume of the monoliths were 0.21, 0.25 and 0.37 ml g⁻¹, respectively.

The evaluation of the adsorption capacity of this material under a dynamic system was conducted in a reactor of internal diameter 10 mm at a pressure of 0.94 kg cm⁻² and at a temperature of 30°C. The sample of adsorbent was previously dried at 150°C in a stream of air for 12 hours. The temperature of the reactor was then lowered to 30°C and, maintaining this temperature, a stream of air was fed containing 100 ppm of o-dichlorobenzene at a linear speed of 0.32 m s⁻¹ (measured under normal conditions). The concentration of the organic compound at the inlet and outlet to and from the reactor was measured with a sensitivity of ± 0.1 ppm by means of a flame ionisation detector. The breaking point was considered to be the time of operation passed until the concentration of o-dichlorobenzene at the outlet reached the value of 0.3 ppm. The amount of o-dichlorobenzene adsorbed in the monolith was 0.20 grams per gram of adsorbent (41 % of its capacity under static conditions).

In another experiment, water contaminated with dioxins and furanes was made to pass through these monoliths at a linear speed of 0.4 m s⁻¹, with a spatial speed of 250 h⁻¹ and a temperature of 60-70°C. At the end of the 15 days which the trial lasted, the total concentration of dioxins and furans in the water, expressed in international toxic equivalents, was 404 pg l'TEQ I⁻¹ at the inlet and 78 pg ITEQ I⁻¹ at the outlet.

The classification of sizes - micro, meso and macro - used in this document is that adopted by the IUPAC "Manual of Symbols and Terminology of Physicochemical Quantities and Units" E. Butterworths. London (1972). The values of the pore volumes and of specific surface of the materials were determined by mercury intrusion and by means of nitrogen adsorption following the BET method.

### Example 3

The efficiency of the compositions of the present invention has been proved through their use as adsorbents at the exit of chimneys, such as a chimney of a cement industry. Namely, a composition according to the invention with a hollow cylinder shape, and the gases at the entry and at the exit thereof in Cementos Lemona (Biscay) have been analysed. The results shown in the tables below were obtained, wherein the composition of gases at the entry and at the exit of the chimney are indicated.

| **Polluting agent** | **Mass flow at the entry (g/h)** | **Mass flow at the exit (g/h)** | **yield (%)** |
|---|---|---|---|
| Nitrogen oxides | 17,11 | 2,33 | 86,40 |
| Carbon monoxide | 119,71 | 6,86 | 94,27 |
| Total amount of organic carbon | 1,41 | 1,41 | |
| Sulphur dioxide | 4,47 | <1,56 | >65,17 |
| Solid particles | 10,5 | 7,0 | 33,81 |
| | | | |

| **heavy metals (sol + gas)** | **Mass flow at the entry (mg/h)** | **Mass flow at the exit (mg/h)** | **yield (%)** |
|---|---|---|---|
| Manganese (Mn) | 0,1253 | 0,0447 | 64,31 |
| Quicksilver (Hg) | 0,202 | 0,0234 | 88,39 |
| Cadmium (Cd) | 0,0409 | 0,0027 | 93,33 |
| Nickel (Ni) | 0,2471 | 0,0948 | 61,62 |
| Copper (Cu) | 0,2536 | 0,0530 | 79,09 |
| Lead (Pb) | 0,6671 | 0,1052 | 84,23 |
| Thallium (TI) | 0,4662 | <0.0559 | 88,01 |

### Example 4

The compositions of the invention can be used as adsorbents for gases removing bacteria, mites, dust and any kind of microorganisms. Thus, their efficiency as adsorbent for air has been proved, showing the microbactericide effect of a composition according to the invention, namely with a hollow cylinder shape. By analysing the air containing bacteria such as *Bordetella avium, Escherichia coli K-88, Enterococcus aerogenes, Enterococcus faecalis, Listeria monocytogenes, Pasteurella multocida, Proteus vulgaris, Pseudomona aeruginosa, Salmonella cholerasuis, Salmonella typhimurium, Staphylococcus aureus, Staphylococcus suis sero* 2, *Vibrio vulnificus* and *Vibrio parahaemolyticus,* it was proved that the composition removes all the bacteria contained in said air

### Example 5

In another example, the bactericide effect was shown through the removing of all the bacteria in air containing *Escherichia coli C-73, Escherichia coli C-68, Salmonella enteriditis, Salmonella typhimurium, Salmonella seffemberg, Pseudomona C-102, Pseudomona C-107* and *Legionella.*

### Example 6

The compositions of the invention can be used as adsorbents for gases in food and their efficiency was proved, showing their bactericide effect by removing all the bacteria of samples Containing, among others: *Escherichia coli OA57 : H7, Salmonella enteritidis, Listeria monocytogenes* and *Campylobacter jejuni.*

### Example 7

Also the fungicide effect was proved, by removing all kinds of fungi. For example, samples containing among others *Candida albicans, Trichophyton mentagrophyte* and *Apergillus Niger,* were analysed proving that the analysis at the exit of a filter with a composition according to the invention, with a hollow cylinder shape en forma did not contain any fungus.

### Example 8

Also the effect on the environmental pollution was proved, through the analysis of samples containing for example: mites, microdust, environmental smells, halogenated hydrocarbons, dioxines, furanes, aromatic hydrocarbons, organic compounds, organic volatile compounds, proving that any of siad substances were present in the air at the exit of the filter containing a composition according to the present invention in the shape of hollow cylinders.

## Claims

1. A composition of an adsorbent material **characterised in that** it comprises enstatite together with a second component selected from between:
a) activated carbon and
b) alumina powder.

2. A composition of an adsorbent material according to claim 1, **characterised in that** said composition is shaped as granules, tablets, spheres, solid cylinders, hollow cylinders or plates.

3. A composition of an adsorbent material according to claim 2, **characterised in that** said hollow cylinders are selected from among smooth cylinders of regular or irregular cut, striated cylinders of regular or irregular cut, straight cylinders of regular or irregular cut and curved cylinders of regular or irregular cut.

4. A composition of an adsorbent material according to claim 1, **characterised in that** said composition is shaped as a structure of parallel channels along the longitudinal axis in a number greater than 2 and less than 100 channels per square centimetre of transverse cross-section.

5. A composition of according to one of the foregoing claims, **characterised in that** it comprises enstatite and activated carbon and possesses segregated particles of activated carbon of a size between 2 and 20 µm.

6. A composition according to one of claims 1, 2 or 3, **characterised in that** it comprises enstatite and alumina.

7. A method for preparing a composition defined in claim 1, **characterised in that** it comprises the following steps:
a) mixing powders of α-sepiolite and the second component until a homogenous mix of powders is obtained,
b) kneading the homogenous mix of powders obtained with the addition of water in order to produce a damp paste,
c) shaping the damp paste into the desired shape for obtaining a piece,
d) drying the shaped piece by exposure to air and at ambient temperature for at least 2 hours and at between 80 and 270°C for 2 hours,
e) subjecting the piece to heat treatment at temperatures between 830 and 1250°C for at least 2 hours.

8. A method according to claim 7, **characterised in that** stage e) comprises treating the piece at temperatures between 830°C and 1250°C. for at least 2 hours.

9. A method according to claim 7, **characterised in that** stage e) comprises treating the piece at temperatures between 830°C and 1250°C in an inert or reducing atmosphere, for at least 2 hours

10. A method for preparing a composition defined in claim 1, **characterised in that** it comprises the following steps:
a) mixing powders of α-sepiolite and of activated carbon until a homogenous mix of powders is obtained,
b) kneading the homogenous mix of powders obtained with the addition of water in order to produce a damp paste,
c) shaping the damp paste into the desired shape for obtaining a piece,
d) drying the shaped piece by exposure to air and at ambient temperature for at least 2 hours and at between 80 and 270°C for 2 hours,
e) subjecting the piece to heat treatment at temperatures between 830 and 900°C, in an inert or reducing atmosphere, for at least 2 hours.

11. A method according to claim 10, **characterised in that** in stage a) α-sepiolite and activated carbon are mixed in a weighted ratio of α-sepiolite / activated carbon of 0.5 ≤ r ≥ 4.

12. A method according to claim 10, **characterised in that** in stage a) α-sepiolite and activated carbon are mixed in a weighted ratio of α-sepiolite / activated carbon of 1 ≤ r ≤ 2.

13. Use of a composition defined in one of claims 1 to 6, as adsorbent material for liquids, gases and vapours.

14. Use according to claim 13, **characterized in that** it comprises a treatment of air removing bacteria, mites, dust, microorganisms, organic compounds and heavy metals.

15. Use according to claim 13, **characterized in that** it comprises a treatment of industrial gases removing carbon oxides, nitrogen oxides, sulphur oxides and heavy metals.

16. Use according to claim 13, **characterized in that** the compositions are used as adsorbents for gases in the food industry removing bad smells and bacteria.

17. Use according to claim 13, **characterized in that** the compositions are used as adsorbents removing fungi.
